# FASCICULE DE BREVET EUROPEEN

(11) **EP 2 610 483 B1**
(45) Date de publication et mention de la délivrance du brevet: **14.10.2015**
(21) Numéro de dépôt: 12194989.5
(22) Date de dépôt: 30.11.2012
(51) Int. Cl.: F03D 3/06, F03D 7/02

(54) **Eolienne à axe vertical**
Vertical-axis wind turbine
Windkraftanlage mit vertikaler Achse

(30) Priorité: 02.01.2012 FR 1250003
(43) Date de publication de la demande: 03.07.2013
(73) Titulaire: Société Financière Gérard Allot, 27370 La Harengère (FR)
(72) Inventeur: Allot, Gérard, 27370 LA HARENGERE (FR)
(74) Mandataire: Jouanneau, Lionel

(56) Documents cités:
- WO-A1-02/052149
- DE-A1- 1 503 256
- DE-A1- 3 000 134
- FR-A1- 2 924 180
- FR-A1- 2 960 267
- GB-A- 306 772
- US-A1- 2011 006 526

## Description

La présente invention se rapporte à une éolienne de type à axe vertical.

Les éoliennes sont des dispositifs de génération d'énergie électrique qui revêtent une importance croissante pour le développement des énergies renouvelables.

Il existe par conséquent un besoin permanent d'améliorer leur efficacité et d'optimiser leur rendement.

De manière générale, une éolienne comprend un mât, une nacelle et un rotor supportant des pâles.

Le mât est destiné à l'implantation de l'éolienne et permet d'amener le rotor à une hauteur suffisante pour permettre la prise au vent des pâles et la rotation de l'ensemble.

La nacelle est montée au sommet du mât et abrite divers composants mécaniques et électriques, notamment, nécessaires au fonctionnement de la machine. La nacelle sert notamment à supporter le rotor et est généralement montée de manière mobile en rotation sur le mât, afin de permettre l'orientation de la machine dans la bonne direction.

Le rotor est la structure permettant de convertir l'énergie cinétique du vent en énergie mécanique avant éventuelle conversion en énergie électrique. Pour ce faire, le rotor est équipé de pâles d'entraînement et est monté sur la nacelle.

On peut distinguer deux structures principales d'éoliennes, à savoir les éoliennes à axe horizontal et les éoliennes à axe vertical.

Les éoliennes à axe horizontal comprennent un rotor dont l'axe est orienté de manière sensiblement perpendiculaire à l'axe du mât, et donc sensiblement horizontalement lorsque l'éolienne est implantée. Les pâles sont elles mêmes montées sur le rotor selon une direction sensiblement perpendiculaire à ce dernier.

Le rotor et ses pales forment ainsi une hélice orientable perpendiculairement au vent.

Dans ce type d'éoliennes, toutes les pales sont orientées face au vent, et sont donc toutes des pâles travaillantes tout au long d'un cycle de rotation, ce qui permet un rendement élevé.

Il convient toutefois de noter que l'axe de rotation de pâles étant orienté sensiblement dans la direction du vent, ces dernières doivent être profilées de manières à permettre la transformation d'une poussée axiale du vent en mouvement de rotation autour de ce même axe. Il s'ensuit que le rapport de la surface totale d'emprise au vent des pâles sur la surface totale des pâles (rapport de puissance) est relativement faible.

Par ailleurs, de telles éoliennes nécessitent généralement une vitesse minimale du vent relativement élevée, ce qui vient abaisser leur rendement global sur, par exemple, une année dans une région exposée à des vents relativement faibles.

La taille des pâles impacte donc directement sur le rapport de puissance et il sera plus intéressant d'un point de vue énergétique de réaliser des éoliennes avec de grandes pâles.

On notera également que la vitesse linéaire des extrémités des pâles peut être très élevée. L'énergie cinétique de la pâle peut ainsi devenir très importante, jusqu'à gêner son exploitation et nécessité sa mise en pane.

Par ailleurs, on comprend que de telles éoliennes sont sensibles à une orientation optimale de l'axe du rotor dans la direction du vent. Cela nécessite généralement une motorisation de la nacelle, ce qui rend le système complexe, consommateur d'énergie, et peu réactif à des vents changeants en direction.

Les éoliennes à axe horizontal sont ainsi des dispositifs généralement encombrants, difficilement intégrables en ville ou sur des toits de bâtiments.

En effet, ce type d'éoliennes nécessite en outre une hauteur de mât relativement élevée et dépendant de la taille des pâles puisque la hauteur du mât doit être au moins supérieur à la dimension des pâles afin de les dégager du sol.

La hauteur d'une telle éolienne est généralement d'environ 20 mètres pour les petites éoliennes, et jusqu'à plusieurs dizaines de mètres pour les plus grandes.

Les éoliennes à axe vertical présentent quant à elle un rotor dont l'axe de rotation est orienté sensiblement dans le prolongement de l'axe du mât. Les pâles sont montées sur des bras support et s'étendent selon une direction sensiblement parallèle au rotor, et au mât.

Ainsi, la hauteur du mât n'est pas liée à la hauteur des pales et peut être extrêmement réduite. Par ailleurs le mât peut éventuellement être réalisé sous la forme d'une base de forme indifférente qui ne risque pas d'interférer avec les pâles.

Ce type d'éoliennes présente donc des avantages incontestables en termes d'encombrement, et elles peuvent être plus facilement intégrées dans des environnements urbains ou sur le toit de bâtiments.

Par ailleurs, une éolienne à axe verticale visant à transformer une poussée axiale du vent en mouvement de rotation autour d'un axe sensiblement perpendiculaire à ce même axe, il est possible de mettre en oeuvre des pâles présentant une surface d'emprise maximale et un rapport de puissance (surface d'emprise au vent sur la surface totale de la pâle) maximal.

Par rapport à une pâle d'éolienne à axe horizontale, pour une même taille de pâle, le rapport de puissance présente au moins un facteur dix en faveur de l'éolienne à axe vertical.

On notera également que la vitesse linéaire de l'extrémité d'une hélice d'éolienne présente le même genre de ratio entre les deux systèmes.

Il convient toutefois de noter que les éoliennes à axe vertical possèdent généralement un rendement inférieur à celui des éoliennes à axe horizontal et sont moins utilisées.

En effet, alors qu'une éolienne à axe horizontal a toutes ses pales travaillantes, une éolienne à axe vertical doit prendre en compte le travail des pâles au cours d'un cycle complet de rotation où chaque pâle passe alternativement d'une phase travaillante, dans laquelle, la pression du vent s'exerçant sur la pâle génère un couple orienté dans le sens de rotation souhaité (générateur), à une phase potentiellement freinante susceptible de générer un couple orienté dans un sens opposé (freinant ou résistant).

Ainsi, le parcours de chaque pâle doit être pris en compte et ses profils (profil travaillant exposé en vent en phase travaillante et profil freinant exposé au vent en phase freinante) optimisés pour maximiser la prise au vent de chaque pâle en phase travaillante et inversement la minimiser au cours de sa phase potentiellement freinante.

Pour ce faire, il convient généralement de prévoir des pâles présentant une dissymétrie de profil entre leur profil travaillant et leur profil freinant.

On distingue ainsi plusieurs types d'éoliennes à axe vertical.

Le type DARRIEUS utilise l'effet de portance subi par un profil soumis à l'action d'un vent relatif, similaire à l'effet qui s'exerce sur une aile d'avion.

Plus précisément, son fonctionnement utilise le fait qu'un profil placé dans un écoulement d'air selon différents angles (cycle de rotation) est soumis à des forces de trainée et de portance d'intensités et de directions variables. Une étude et modélisation précise du profil des pâles en fonction de leur orientation, des vitesses de vents attendues, du nombre de pâles, entre autres paramètres, doit donc être réalisée afin de générer un couple moteur élevé et obtenir un rendement maximal.

Ceci peut donner lieu à des calculs complexes et les résultats obtenus sont rarement à la hauteur des performances escomptées.

Le type SAVONIUS comprend des pales se présentant sous la forme de godets de forme sensiblement demi-cylindrique et désaxés.

Le profil creux du godet offre une prise au vent maximale, tandis que le profil bombé de la pale opposée offre une prise au vent réduite permettant son écoulement autour de la pâle lors de la phase potentiellement freinante du cycle. Le bilan des forces s'exerçant sur l'éolienne penche alors nettement en faveur des forces d'entraînement, ce qui permet la rotation de l'éolienne.

Ainsi, bien que chaque pâle présente un rapport de puissance élevé, a priori plus avantageux que pour une éolienne à axe horizontal, le bilan global sur l'éolienne en prenant en compte les forces freinantes, entraîne un rendement globalement inférieur.

On notera toutefois, que la prise au vent maximale de chaque pâle permettent aux éoliennes à axe vertical de démarrer à des vitesses de vent relativement réduites et inférieures aux vitesses minimales des éoliennes à axe horizontal.

Afin de résoudre le problème des phases freinantes lors d'un cycle de rotation, une solution antique (panémone) consistait à ériger un muret autour de la moitié de l'éolienne afin de ne laisser que les pâles travaillantes exposées au vent. Bien évidemment, cette solution ne permet aucune adaptation à la direction du vent.

On connaît également un type d'éolienne à axe vertical développé plus récemment et dont les pales s'orientent en temps réel au cours de leur cycle de rotation de manière à reproduire sensiblement les allures d'une voile de voilier qui suivrait une trajectoire circulaire avec un vent déterminé. Ce type est connu sous le nom d'éolienne à voilure tournante ou à calage variable.

Dans ce type éolienne, chaque pâle se comporte donc sensiblement comme un voilier avançant à l'allure appropriée et n'a donc plus de phase freinante, ou extrêmement réduite, pour peu que l'orientation de sa voilure soit optimale.

Cette orientation dynamique est toutefois particulièrement difficile à gérer et maîtriser. Elle nécessite des engrenages et autres systèmes introduisant des frottements mécaniques additionnels qui viennent limiter le rendement global de l'éolienne. Il faut également tenir compte de l'usure de ces mécanismes soumis à une sollicitation permanente.

Par ailleurs, il reste nécessaire de considérer les pâles dans leur ensemble et de faire un bilan des couples s'exerçant sur le mât. Cela peut rendre complexe l'adaptation du système en fonction du nombre de pâles équipant l'éolienne.

Par ailleurs, le modèle théorique utilisé (trajectoire circulaire, vent stable) correspond rarement à la réalité des conditions auxquelles une éolienne est soumise.

Une solution visant à pallier les inconvénients précédemment mentionnés prévoit les pâles sont associées à au moins une came de guidage décrivant une trajectoire périphérique autour du rotor et apte à coopérer avec au moins un moyen d'actionnement des pâles de manière à permettre leur rotation autour de leur axe de calage en fonction de la trajectoire de la came par rapport à la trajectoire sensiblement circulaire dudit axe de calage autour du rotor.

Les documents DE 30 00 134, FR 2 960 267 et GB 306 772 notamment divulguent de telles éoliennes.

Grâce à un calage par came de guidage périphérique, ces systèmes permettent de disposer d'un système mécaniquement simple et fiable répondant à cette problématique. Cela rend également le système adaptable à la configuration de l'éolienne puisqu'il suffit de changer la came en fonction de la trajectoire souhaitée, du nombre de pâles, etc.

Il existe cependant toujours un besoin constant d'améliorer encore ces systèmes.

Pour ce faire, la présente invention se rapporte à une éolienne à axe vertical comprenant au moins un rotor supportant une pluralité de pâles à calage variable chacune montée mobile en rotation autour d'un axe de calage sensiblement parallèle au rotor, les pâles étant associées à au moins une came de guidage décrivant une trajectoire périphérique autour du rotor et apte à coopérer avec au moins un moyen d'actionnement des pâles de manière à permettre leur rotation autour de leur axe de calage en fonction de la trajectoire de la came par rapport à la trajectoire sensiblement circulaire dudit axe de calage autour du rotor, **caractérisée en ce que** les moyens d'actionnement des pâles sont débrayables de la came de guidage de manière à notamment permettre le blocage en drapeau desdites pâles sur la came et l'inhibition de l'éolienne.

Ainsi, grâce à une came débrayable permettant la mise en drapeau des pâles, la sécurité de l'installation par grand vent est assurée. Par ailleurs, en cas de faible vent, cela permet de ne pas faire travailler l'éolienne pour une production faible, et donc limiter l'usure des pièces et le bruit généré.

Préférentiellement, le moyen d'actionnement des pâles est un bras de levier. Préférentiellement encore, le bras de levier est monté sur l'axe de calage.

Avantageusement, **caractérisée en ce que** l'axe de calage est un axe sensiblement médian de la pâle.

Préférentiellement, la came de guidage se présente sensiblement sous la forme d'un rail. Préférentiellement encore, le moyen d'actionnement de la pâle coopère avec la came par l'intermédiaire d'au moins un galet de roulement.

Un système rail/galet permet de réduire les frottements de manière importante par rapport à un système à engrenages.

Selon un mode de réalisation, la came de guidage présente une trajectoire elliptique.

Bien évidemment, la forme de la came de guidage et la trajectoire formée sera adaptée à l'orientation souhaitée pour les pâles au cours d'un cycle de rotation. On pourra assurer des transitions progressives ou des variations d'orientation plus marquées, voire jusqu'à atteindre un quasi basculement entre une position active sur une portion du trajet de la pâle et une position inactive dite drapeau sur le reste du cycle.

De manière avantageuse, la came de guidage est orientable, notamment en fonction de la direction du vent.

On comprendra aisément qu'une telle disposition réduit l'usure générale des pièces, la came de guidage n'étant réorientée qu'en fonction des changements de vent alors qu'un système selon l'art antérieur dans lequel chaque pâle est individuellement réorientée entraîne des sollicitations mécaniques plus importantes et permanentes.

Préférentiellement, la came de guidage est orientable à l'aide d'au moins un servomoteur. Un tel servomoteur pourra être asservi à une girouette, mécaniquement ou électroniquement.

Selon un mode particulière de réalisation, au moins une partie de la surface des pâles est recouverte de cellules photovoltaïques. Ainsi, on combine ainsi les deux formes d'énergies renouvelables et la transformation complémentaire de l'énergie solaire en électricité vient encore augmenter le rendement global de l'éolienne.

Avantageusement, la came, en position débrayée des pâles, constitue un suiveur solaire permettant notamment un suivi en azimut.

L'orientation du suiveur pourra s'effectuer par le servomoteur le cas échéant ou par d'autres moyens dédiés.

Ainsi, plusieurs configurations de fonctionnement de l'éolienne sont possibles.

En présence d'un vent moyen à fort et en l'absence relative de soleil, l'énergie éolienne sera prédominante et l'éolienne pourra fonctionner en mode éolien.

En présence d'un vent moyen à fort et en présence de soleil, l'énergie éolienne récupérée sera complétée par un apport d'énergie photovoltaïque.

En présence d'un vent faible ou insuffisant, l'énergie éolienne récupérable est faible par rapport à l'énergie photovoltaïque. Grâce au débrayage de la came de guidage des pâles, l'éolienne pourra fonctionner en mode suiveur solaire avec suivi notamment en azimut.

En présence d'un vent faible ou insuffisant, et en l'absence relative de soleil, L'éolienne fonctionnera également en mode suiveur solaire et récupèrera l'énergie lumineuse diffuse disponible à cet instant.

La présente invention sera mieux comprise à la lumière de la description détaillée qui suit en regard du dessin annexé dans lequel :

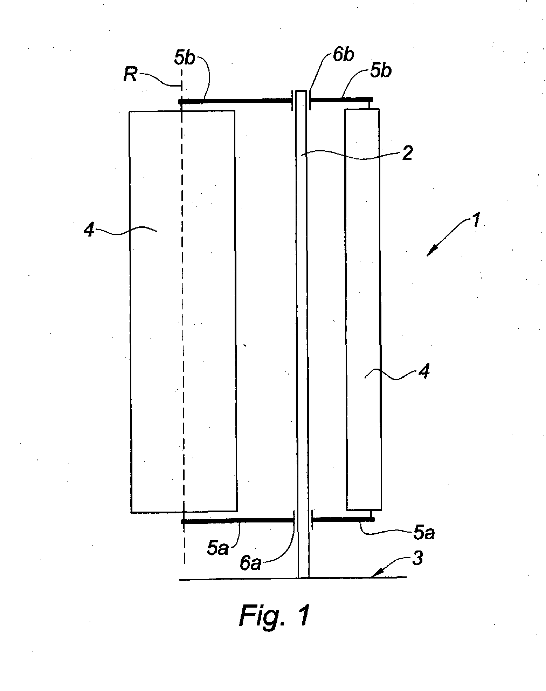

- la figure 1, est une vue de côté de principe d'une éolienne à axe vertical et à calage variable selon l'invention,
- la figure 2 est une représentation schématique de l'éolienne à axe vertical et à calage variable selon l'invention,
- la figure 3 est une vue de dessus de principe illustrant le fonctionnement de l'éolienne par vent normal (mode éolien prédominant),
- la figure 4 est une vue de dessus de principe illustrant le fonctionnement de l'éolienne par tempête (came débrayée).
- les figures 5 à 7 sont des vues de dessus de principe illustrant le fonctionnement de l'éolienne en mode solaire, respectivement le matin à l'est, le midi au sud, et le soir à l'ouest.

De manière simplifiée, une éolienne 1 à axe vertical et à calage variable comprend un mât 2 implanté dans le sol 3 (ou sur une autre surface, notamment par l'intermédiaire d'un pied de mât 2) et un ensemble de pâles 4 montées mobiles en rotation autour dudit mât 2.

Les pâles 4 présentent de manière schématique une forme plane sensiblement rectangulaire mais elles peuvent bien évidemment être profilées ou présenter d'autres formes. Elles seront réalisées généralement dans un matériau rigide.

Chaque pâle 4 est montée en rotation autour du mât 2 par l'intermédiaire de bras latéraux 5 d'un rotor 6 destiné à entraîner une génératrice (non visible).

Plus précisément, chaque pâle 4 est supportée par un bras inférieur 5a et un bras supérieur 5b constituant respectivement les bras latéraux 5 d'un palier inférieur 6a et d'un palier supérieur 6b formant le rotor 6.

Afin de permettre l'orientation des pâles 4 en cours de cycle, chaque pâle 4 est montée sur ses bras inférieur 5a et supérieur 5b par l'intermédiaire d'un pivot. Les liaisons aux bras inférieur 5a et supérieur 5b définissent ainsi un axe R sensiblement médian de la pâle autour duquel elle est apte à pivoter.

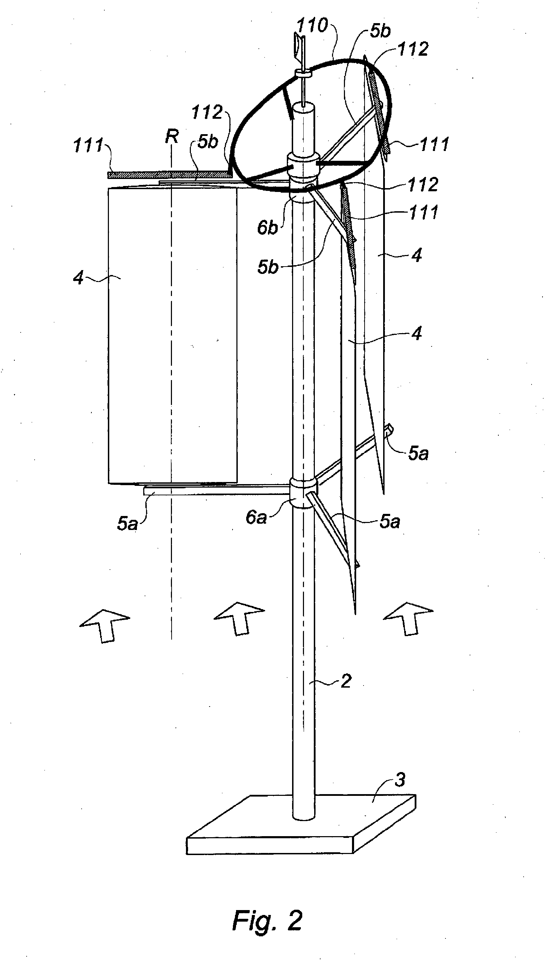

Selon un perfectionnement représenté sur la figure 2, une éolienne 100 selon l'invention diffère de l'éolienne 1 en ce qu'elle comprend une came de guidage 110 décrivant une trajectoire périphérique autour du mât 2 et du rotor 6, et apte à assurer le pivotement des pâles 4 selon une trajectoire prédéterminée.

Pour ce faire, chaque pâle 4 est associée au niveau du bras supérieur 5b à un levier de pivotement 111 lié au pivot et constituant ainsi un moyen d'actionnement de la pâle 4 permettant de l'entraîner en rotation autour de l'axe R.

Chaque levier de pivotement 111 est équipé d'un doigt de guidage (ou galet de roulement) 112 coopérant avec la came de guidage 110 (se présentant par exemple sous la forme d'un rail).

Ainsi, alors que chaque pâle 4 possède une trajectoire sensiblement circulaire autour du mât 2, la came de guidage 110 permet d'ajuster la trajectoire de chaque levier de pivotement 111 et de l'en dissocier.

A chaque instant, la différence de trajectoire entre la pâle 4 et son levier de pivotement 111 (le doigt de guidage 112 étant déporté de l'axe de pivotement R) permet de créer un pivotement permettant de modifier le calage de la pâle 4 en fonction de sa position dans son cycle de rotation.

De manière simplifiée, la came de guidage 110 pourra présenter une forme sensiblement elliptique. Bien évidemment, la forme de la came de guidage 110 peut être travaillée et ajustée plus finement en fonction des paramètres de l'éolienne (forme des pâles, nombre de pâles, etc).

Ainsi, au cours de son cycle de rotation autour du mât 2, chaque pâle 4 est amenée à pivoter afin d'adopter une position la moins freinante et la plus travaillante possible par rapport au vent (flèche).

Afin de pouvoir s'adapter aux changements de direction du vent, la came de guidage 110 pourra être montée orientable, notamment par asservissement à une girouette, cet asservissement pouvant être mécanique, ou électronique par l'intermédiaire d'un servomoteur.

En outre, les pâles 4 de l'éolienne 200 sont recouverts de panneaux photovoltaïques, permettant ainsi la conversion non seulement de l'énergie éolienne mais également de l'énergie solaire.

Conformément à l'invention, on prévoira des moyens de débrayage des leviers de pivotement 111 de la came de guidage 110 afin de permettre la mise en panne des pâles 4 de l'éolienne 100.

La présente éolienne permet ainsi un fonctionnement mixte, à la fois solaire et éolien. La came 110, en position débrayée des pâles, constitue alors un suiveur solaire permettant notamment un suivi en azimut.

L'orientation de la came 110 (suiveur) s'effectuera par l'intermédiaire du servomoteur.

Ainsi, plusieurs configurations de fonctionnement de l'éolienne sont possibles.

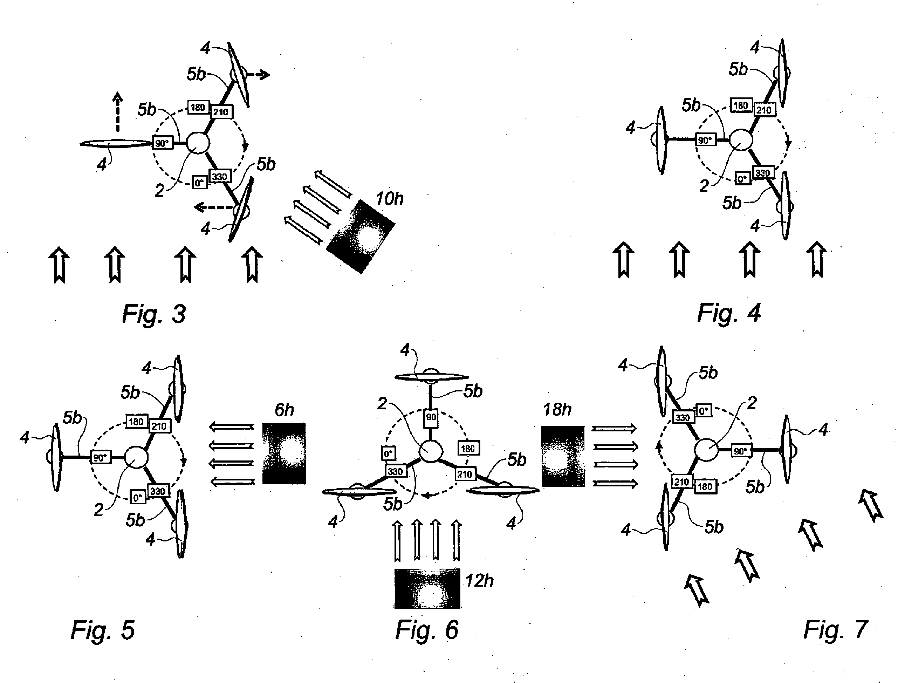

En présence d'un vent moyen à fort (figure 3), l'énergie éolienne sera prédominante et l'éolienne pourra fonctionner en mode éolien. Les pâles 4 récupéreront également une partie d'énergie photovoltaïque qui viendra augmenter la productivité globale de l'éolienne.

En cas de vent violent, l'éolienne 200 sera mise en sécurité tempête par débrayage de la came 110 (Figure 4). Les pâles 4 sont bloquées en drapeau sur la came 110. Dans cette position, la came 110 est pilotée selon l'orientation du vent (girouette).

En présence d'un vent faible ou insuffisant (Figures 5 à 7), l'énergie éolienne récupérable est faible par rapport à l'énergie photovoltaïque. Grâce au débrayage de la came de guidage 110 des pâles 4, l'éolienne pourra fonctionner en mode suiveur solaire avec suivi notamment en azimut.

La figure 5 montre la position de la came de guidage 110, le matin, les pâles 4 étant orientées vers l'est.

La figure 6 montre la position de la came 110 le midi, les pâles étant alors orientées vers le sud.

La figure 7 montre la position de la came 110 le soir, les pâles 4 étant orientées vers l'ouest.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Eolienne à axe vertical comprenant au moins un rotor (6) supportant une pluralité de pâles (4) à calage variable chacune montée mobile en rotation autour d'un axe de calage (R) sensiblement parallèle au rotor, les pâles étant associées à au moins une came de guidage (110) décrivant une trajectoire périphérique autour du rotor et apte à coopérer avec au moins un moyen d'actionnement (111) des pâles de manière à permettre leur rotation autour de leur axe de calage en fonction de la trajectoire de la came par rapport à la trajectoire sensiblement circulaire dudit axe de calage autour du rotor, **caractérisée en ce que** les moyens d'actionnement des pâles sont débrayables de la came de guidage de manière à permettre le blocage en drapeau desdites pâles sur la came et l'inhibition de l'éolienne.

2. Eolienne selon la revendication 1, **caractérisée en ce que** le moyen d'actionnement des pâles est un bras de levier (111).

3. Eolienne selon la revendication 2, **caractérisée en ce que** le bras de levier (111) est monté sur l'axe de calage (R)

4. Eolienne selon l'une quelconque des revendications 1 à 3, **caractérisée en ce que** l'axe de calage (R) est un axe sensiblement médian de la pâle (4).

5. Eolienne selon l'une quelconque des revendications 1 à 4, **caractérisée en ce que** la came de guidage (110) se présente sensiblement sous la forme d'un rail.

6. Eolienne selon la revendication 5, **caractérisée en ce que** le moyen d'actionnement (111) de la pâle (4) coopère avec la came (110) par l'intermédiaire d'au moins un galet de roulement.

7. Eolienne selon l'une quelconque des revendications 1 à 6, **caractérisée en ce que** la came de guidage (110) présente une trajectoire elliptique.

8. Eolienne selon l'une quelconque des revendications 1 à 7, **caractérisée en ce que** la came de guidage (110) est orientable, notamment en fonction de la direction du vent.

9. Eolienne selon la revendication 8, **caractérisé en ce que** la came de guidage (110) est orientable à l'aide d'au moins un servomoteur.

10. Eolienne selon l'une quelconque des revendications 1 à 9, **caractérisée en ce que** au moins une partie de la surface des pâles est recouverte de cellules photovoltaïques.

11. Eolienne selon la revendication 10, **caractérisée en ce que** la came, en position débrayée des pâles, constitue un suiveur solaire permettant notamment un suivi en azimut.

## Patentansprüche

1. Windkraftanlage mit vertikaler Achse, zumindest einen Rotor (6) umfassend, der eine Vielzahl von Blättern (4) mit variabler Winkelverstellung trägt, die alle jeweils drehbar um eine Verstellachse (R) montiert sind, die in etwa parallel zum Rotor verläuft, wobei die Blätter zumindest einem Führungsnocken (110) zugeordnet sind, der eine umlaufende Bahnkurve um den Rotor beschreibt, und in der Lage ist, derart mit zumindest einem Betätigungsmittel (111) der Blätter zusammenzuwirken, um in Abhängigkeit von der Bahnkurve des Nockens im Verhältnis zur in etwa kreisförmigen Bahnkurve der besagten Verstellachse um den Rotor deren Rotation um ihre Verstellachse zu ermöglichen, **dadurch gekennzeichnet, dass** die Betätigungsmittel der Blätter vom Führungsnocken ausgekuppelt werden können, um die Blockierung der besagten Blätter auf dem Nocken in Segelstellung und die Sperre der Windkraftanlage zu ermöglichen.

2. Windkraftanlage nach Anspruch 1, **dadurch gekennzeichnet, dass** das Betätigungsmittel der Blätter ein Hebelarm (111) ist.

3. Windkraftanlage nach Anspruch 2, **dadurch gekennzeichnet, dass** der Hebelarm (111) auf der Verstellachse (R) montiert ist.

4. Windkraftanlage nach irgendeinem der Ansprüche 1 bis 3, **dadurch gekennzeichnet, dass** die Verstellachse (R) eine in etwa mittig verlaufende Achse des Blattes (4) ist.

5. Windkraftanlage nach irgendeinem der Ansprüche 1 bis 4, **dadurch gekennzeichnet, dass** sich der Führungsnocken (110) in etwa in Form einer Schiene darstellt.

6. Windkraftanlage nach Anspruch 5, **dadurch gekennzeichnet, dass** das Betätigungsmittel (111) des Blattes (4) über zumindest eine Laufrolle mit dem Nocken (110) zusammenwirkt.

7. Windkraftanlage nach irgendeinem der Ansprüche 1 bis 6, **dadurch gekennzeichnet, dass** der Führungsnocken (110) eine elliptische Bahnkurve aufweist.

8. Windkraftanlage nach irgendeinem der Ansprüche 1 bis 7, **dadurch gekennzeichnet, dass** der Führungsnocken (110) vor allem in Abhängigkeit von der Windrichtung ausrichtbar ist.

9. Windkraftanlage nach Anspruch 8, **dadurch gekennzeichnet, dass** der Führungsnocken (110) mithilfe von zumindest einem Servomotor ausrichtbar ist.

10. Windkraftanlage nach irgendeinem der Ansprüche 1 bis 9, **dadurch gekennzeichnet, dass** zumindest ein Teil der Oberfläche der Blätter mit Solarzellen bedeckt ist.

11. Windkraftanlage nach Anspruch 10, **dadurch gekennzeichnet, dass** der Nocken in der ausgekuppelten Position der Blätter eine Sonnen-Nachführeinheit bildet, die vor allem eine Azimut-Verfolgung ermöglicht.

## Claims

1. A vertical-axis wind turbine comprising at least one rotor (6) supporting a plurality of variable-pitch blades (4) each movably mounted in rotation about a pitch axis (R) which is substantially parallel to the rotor, the blades being associated with at least one guiding cam (110) which describes a peripheral trajectory around the rotor and which is capable of cooperating with at least one actuation means (111) of the blades so as to enable their rotation about their pitch axis depending on the trajectory of the cam with respect to the substantially circular trajectory of said pitch axis around the rotor, **characterized in that** the actuating means of the blades may be disengaged from the guiding cam so as to enable the feathered blocking of said blades on the cam and the disabling of the wind turbine.

2. The wind turbine according to claim 1, **characterized in that** the actuating means of the blades consists of a lever arm (111).

3. The wind turbine according to claim 2, **characterized in that** the lever arm (111) is mounted on the pitch axis (R).

4. The wind turbine according to any one of claims 1 to 3, **characterized in that** the pitch axis (R) is a substantially mid-axis of the blade (4).

5. The wind turbine according to any one of claims 1 to 4, **characterized in that** the guiding cam (110) is substantially in the form of a rail.

6. The wind turbine according to claim 5, **characterized in that** the actuating means (111) of the blade (4) cooperates with the cam (110) via at least one running roller.

7. The wind turbine according to any one of claims 1 to 6, **characterized in that** the guiding cam (110) presents an elliptical trajectory.

8. The wind turbine according to any one of claims 1 to 7, **characterized in that** the guiding cam (110) may be oriented, in particular depending on the direction of the wind.

9. The wind turbine according to claim 8, **characterized in that** the guiding cam (110) may be oriented by means of at least one servomotor.

10. The wind turbine according to any one of claims 1 to 9, **characterized in that** at least one portion of the surface of the blades is covered with photovoltaic cells.

11. The wind turbine according to claim 10, **characterized in that**, when the cam is disengaged from the blades, it constitutes a solar tracker which allows in particular an azimuth tracking.
